**Europäisches Patentamt**

**European Patent Office**

**Office européen des brevets**

(19)

(11) Veröffentlichungsnummer: **0 185 954**
**B1**

(12) **EUROPÄISCHE PATENTSCHRIFT**

(45) Veröffentlichungstag der Patentschrift: **14.03.90**

(21) Anmeldenummer: **85115050.8**

(22) Anmeldetag: **27.11.85**

(51) Int. Cl.⁵: **B 23 K 35/30, C 22 C 9/00,**
**B 23 K 35/14**

(54) **Rasch abgeschreckte duktile Lötfolie.**

(30) Priorität: **22.12.84 DE 3447116**

(43) Veröffentlichungstag der Anmeldung:
**02.07.86 Patentblatt 86/27**

(45) Bekanntmachung des Hinweises auf die
Patenterteilung:
**14.03.90 Patentblatt 90/11**

(84) Benannte Vertragsstaaten:
**CH DE FR GB IT LI SE**

(56) Entgegenhaltungen:
**EP-A-0 038 584**
**GB-A- 802 291**
**US-A-3 117 003**
**US-A-4 426 033**
**US-A-4 448 605**

**JOURNAL OF THE INSTITUTE OF METALS,**
**Band 93, Nr. 2, Oktober 1964, Seiten 48-52,**
**London, GB; A. MILNER et al.: "The bonding of**
**metals to uranium dioxide"**

(73) Patentinhaber: **VACUUMSCHMELZE GMBH**
**Grüner Weg 37 Postfach 2253**
**D-6450 Hanau 1 (DE)**

(72) Erfinder: **Emmerich, Kurt, Dr.**
**Im Sand 2**
**D-8755 Alzenau-Hörstein (DE)**

## Beschreibung

Die Erfindung betrifft eine rasch abgeschreckte duktile Lötfolie mit mikrokristalliner Struktur aus einer im wesentlichen aus Kupfer und mindestens einem sauerstoffaffinem Element bestehenden Legierung.

Aktivlote werden zur Verbindung von keramischen und metallischen Werkstoffen verwendet. Aktivlote sind Lote mit Legierungsanteilen von reaktiven Elementen R (-z. B. Ti, Zr, Nb und Ta), wobei der Gehalt an diesen sauerstoffaffinen Elementen eine Vormetallisierung der Keramik beim Lötprozeß überflüssig macht. Ziel der Erfindung ist es, für den Lötprozeß geeignete CuR- und AgCuR-Legierungen, die im Gleichgewichtszustand spröde sind, durch rasches Abschrecken als duktile Lötfolie herzustellen.

Aktivlotlegierungen mit hohem Gehalt an den sauerstoffaffinen Elementen Ti oder Zr sind in der Regel spröde und werden deshalb mechanisch zu Lotpulver verarbeitet (siehe z. B. Nesse, "Untersuchungen zum Aktivlöten von Keramik und Graphit", Metall 27 (1973), Seiten 259 bis 265).

Im AgCuTi-Legierungssystem lassen sich verschiedene Zusammensetzungsbereiche zu Draht- oder Bandform verarbeiten:

a) Legierungen mit einem niedrigen Titangehalt von bis zu 3 Gew.% Ti,

b) Legierungen mit einem sehr hohen Silbergehalt (>50 Gew.% Ag) und

c) binäre CuTi-Legierungen mit hohem Titangehalt von 25 bis 64 Gew.% Ti, die sich im amorphen Zustand herstellen lassen.

Die Phasenzusammensetzungen dieser Bereiche können aus dem Gleichgewichtsphasendiagramm entnommen werden (z. B. V. A. Chang, D. Goldberg, J. P. Neumann, "Phase diagrams and thermodynamical properties of ternary coppersilver systems", J. Phys. Chem. Ref. Data 6 (1977) Seiten 666 bis 669) und in ihrer Verwendbarkeit als Aktivlot bewertet werden:

a) Die Legierungen mit dem niedrigen Ti-Gehalt (<3 Gew.%) lösen das Titan in der binären AgCu-Struktur. Durch den beschränkten Titangehalt ist die Benetzbarkeit der Keramikoberfläche für viele Anwendungsfälle ungenügend. Das Fließverhalten dieser Lote ist mäßig, da sich der Titananteil an der Keramikoberfläche anreichert, so daß das Lot im Spalt an Titan verarmt und somit keine weitere Keramikoberfläche benetzen kann.

b) Legierungen mit einem höheren Titangehalt bilden im Gleichgewichtszustand intermetallische CuTi-Phasen aus, die den Werkstoff verspröden können. Um diese Versprödung zu vermeiden, müssen ausreichend viele duktile Phasen die intermetallischen Phasen umgeben. Derartige Lote, die diesen Vielphasenaufbau aufweisen, sind in der US—PS 3 117 003 beschrieben. Eine Versprödung der Lote kann nur durch einen hohen Silberanteil (≥ 50 Gew.%) vermieden werden (siehe z. B. Ausführungsbeispiel in US—PS 3 117 003). Die Lotzusammensetzungen sind auch in Form von Verbundwerkstoffen, z. B. als AgCu-Eutektikum mit Ti-Seele, auf dem Markt erhältlich.

Sie sind aufgrund des hohen Silbergehalts jedoch verhältnismäßig teuer.

c) Entsprechende Lötfolien mit amorpher Struktur sind im Gießzustand zwar duktil, werden aber bei der Kristallisation während des Lötprozesses sehr spröde, da sie in ihren Zusammensetzungen im Bereich der intermetallischen Phasen liegen. Die Verwendung der amorphen CuTi-Lote beschränkt sich deshalb auf Verbunde, bei denen das Titan beim Lötvorgang mit benachbarten Metallphasen auflegiert werden kann, also z. B. beim Verbund zwischen Kupfer und Keramik (vgl. z. B. K. Brunner, M. Fischer, R. S. Perkins, "Metalceramic bonding by new active brazing materials" in DVS-Berichte 66 (1980), Seiten 37 bis 40) oder durch Verwendung eines Schichtverbundes (EP—OS 00 38 584).

Für das Verbunden von nichtmetallisiertem $Al_2O_3$ wurde gezeigt, daß weder die binären CuTi noch die Ti-armen, noch die Ag-reichen Lote zu einer optimalen Festigkeit der Verbindung führen (M. G. Nicholas, "The development of brazes for unmetallized alumina" in DVS-Berichte, 66 (1980) Seiten 29 bis 32).

Der Erfindung liegt die Aufgabe zugrunde, duktile Lötfolien im Legierungssystem (Ag)CuR herzustellen, die die Nachteile der bisher bekannten Zusammensetzungen vermeiden.

Erfindungsgemäß wird dies durch die kennzeichnenden Merkmale des Patentanspruchs 1 erreicht. Vorteilhafte Weiterbildungen ergeben sich aus den Unteransprüchen.

Zur Herstellung rasch abgeschreckter Metallfolien mit einer innerhalb der in den Ansprüchen 1 und 2 genannten Zusammensetzung, wobei als R-Element vorzugsweise Titan verwendet wurde, wurde ein Gießverfahren angewandt, bei dem die schmelzflüssigen Legierungen auf eine schnell rotierende Walze gegossen wurden (Einwalzenverfahren). Die Verwendung dieses Herstellungsweges für Lötfolien wurde zuerst für Nickelbasislegierungen berichtet (vgl. z. B. Weldung Journal 57 (1978) Seiten 33 bis 38).

Die erfindungsgemäßen Lötfolien weisen nach der Erstarrung eine mikrokristalline Struktur auf. Derart hergestellte AgCuTi-Folien zeigten einen deutlich erweiterten Bereich, in dem die Ausbildung der intermetallischen Phasen durch eine erhöhte Löslichkeit unterdrückt wird und in dem solche duktilen Lötfolien herstellbar sind. Unter der Bezeichnung "duktil" soll hier verstanden werden, daß die Lötfolien auf der Radius r=0 gebogen werden können, ohne zu brechen. Die erfindungsgemäßen Lötfolien werden durch folgenden Zusammensetzungsbereich beschrieben:

$$Ag_{0-44}Cu_{52-96}Ti_{4-8} \text{ bzw. } Cu_{Rest}Ti_{4-11},$$

vorzugsweise ist die Lötfolie folgendermaßen zusammengesetzt:

$$Ag_{0-44}Cu_{54,5-93,5}Ti_{6,5-8} \text{ bzw. } Cu_{Rest}Ti_{6,5-11}.$$

Der Vorteil des beanspruchten Bereiches gegenüber den bisher bekannten Zusammensetzungen liegt

a) in einem höheren Ti-Gehalt und somit in einer besseren Benetzung der Keramik und einem besseren Fließverhalten,

b) in einem geringeren Ag-Gehalt und somit in einer wirtschaftlicheren Lösung und

c) in einer weitgehenden Vermeidung von Sprödphasen in der Lötverbindung.

Anhand einiger Ausführungsbeispiele und einer Gefügeabbildung soll die Erfindung nachstehend noch näher erläutert werden.

Zur Herstellung rasch abgeschreckter Lötfolien wurde die in einem Vorratsbehälter befindliche Schmelze durch die Öffnung einer Gießdüse gepreßt und auf die Oberfläche einer rotierenden Kühlwalze gegossen. Auf der Kühlwalzenoberfläche erstarrte die Schmelze zu einer Folie.

Mit dem sogenannten Einwalzenverfahren wurden sieben erfindungsgemäße Lötfolien unterschiedlicher Zusammensetzung sowie sechs Legierungen als Vergleichsbeispiele durch Raschabschreckung hergestellt. Die jeweilige Zusammensetzung der Ausführungsbeispiele sowie das Ergebnis von Duktilitätsuntersuchungen sind in der Tabelle zusammengefaßt.

| Nr. | Ag | Cu | Ti | Duktilität |
|---|---|---|---|---|
| 1 | — | Rest | 13,5 | nein |
| 2 | — | Rest | 11,2 | ja |
| 3 | — | Rest | 9,3 | ja |
| 4 | — | Rest | 16,4 | nein |
| 5 | — | Rest | 20,0 | nein |
| 6 | 8,8 | Rest | 10,5 | nein |
| 7 | 18,9 | Rest | 9,4 | nein |
| 8 | 49,0 | Rest | 6,0 | nein |
| 9 | 40,0 | Rest | 5,0 | ja |
| 10 | 25,0 | Rest | 5,0 | ja |
| 11 | 20,0 | Rest | 7,0 | ja |
| 12 | 15,0 | Rest | 5,0 | ja |
| 13 | 10,0 | Rest | 7,0 | ja |

An einer beispielhaft ausgewählten Legierung $Ag_{25}Cu_{70}Ti_5$ (Ausführungsbeispiel 10) wurden metallographische Untersuchungen durchgeführt. Es zeigt sich, daß diese Lötfolie ein fein eutektisches Gefüge besitzt. Intermetallische CuTi-Phasen konnten nicht identifiziert werden.

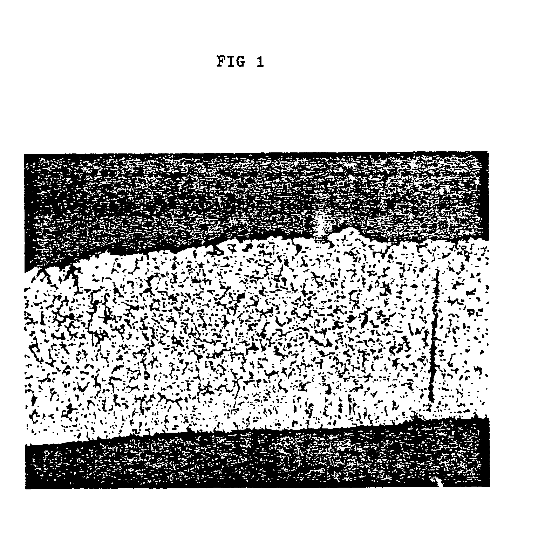

Die Abbildung zeigt das eine sehr kleine Korngröße aufweisende Gefüge der Lötfolie in 1000facher Vergrößerung.

Das Lötverhalten der erfindungsgemäßen Lötfolie wurde ergänzend in einer Verbindung zwischen zwei keramischen Werkstoffen ($Al_2O_3$) überpruft. Es wurde festgestellt, daß die Keramik vollständig von dem Aktivlot benetzt war. Ferner ergaben röntgenographische Aufnahmen, daß die Grenzschichten zwischen Keramik und Lotlegierung eine Titananreicherung aufweisen, während das übrige Lotmetall beträchtlich an Titan verarmt war. Intermetallische Phasen, die eine Versprödung der Verbindung bewirken, wurden nicht beobachtet.

**Patentansprüche**

1. Rasch abgeschreckte duktile Lötfolie mit mikrokristalliner Struktur aus einer im wesentlichen aus Kupfer, mindestens einem sauerstoffaffinem Element und gegebenenfalls Silber bestehenden Legierung, dadurch gekennzeichnet, daß diese Legierung die Zusammensetzung

$Ag_aCu_bR_c$ besitzt mit (in Gew.-%):

$$0 \leq a \leq 44, \quad 52 \leq b \leq 96, \quad 4 \leq c \leq 8,$$

$$a+b+c=100,$$

wobei R mindestens eines der Elemente Titan, Zirkon, Niob und Tantal bedeutet und die Legierung frei von intermetallischen CuR-Phasen ist.

2. Lötfolie nach Patentanspruch 1, dadurch gekennzeichnet, daß sie aus 6,5 bis 8 Gew.-% Titan, bis zu 44 Gew.-% Silber, Rest Kupfer, besteht.

3. Rasch abgeschreckte duktile Lötfolie mit mikrokristalliner Struktur aus einer im wesentlichen aus Kupfer und mindestens einem sauerstoffaffinem Element bestehenden Legierung, dadurch gekennzeichnet, daß diese Legierung die Zusammensetzung $Cu_bR_c$ besitzt, mit (in Gew.-%):

$$89 \leq b \leq 96, \quad 4 \leq c \leq 11,$$

wobei R mindestens eines der Elemente Titan, Zirkon, Niob und Tantal bedeutet und die Legierung frei von intermetallischen CuR-Phasen ist.

4. Lötfolie nach Anspruch 3, dadurch gekennzeichnet, daß R Titan bedeutet und die Zusammensetzung 6,5 bis 11 bis Gew.-% Titan, Rest Kupfer, enthält.

**Revendications**

1. Feuilles de brasure ductiles trempées rapidement avant une structure microcristalline à base d'un alliage composé essentiellement de Cuivre, d'au moins un élément ayant de l'affinité pour l'oyxgène et, le cas échéant, d'Argent, caractérisées en ce que cet alliage possède la composition $Ag_aCu_bR_c$ avec en % en poids:

$$0 \leq a \leq 44; \quad 52 \leq b \leq 96; \quad 4 \leq c \leq 8$$

avec

$$a+b+c=100$$

pour laquelle R représente au moins un des éléments Titane, Zirconium, Niobium et Tantale et pour laquelle l'alliage est dépourvu de phases intermétalliques Cu-R.

2. Feuilles de brasure selon la revendication 1 caractérisées en ce qu'elles consistent en 6,5 à 8% en poids de Titane, jusqu'à 44% en poids d'Argent et le reste du Cuivre.

EP 0 185 954 B1

3. Feuilles de brasure ductiles trempées rapidement à base d'un alliage se composant essentiellement de Cuivre et d'un élément ayant de l'affinité pour l'oxygène au moins, caractérisé en ce que cet alliage possède la composition $Cu_bR_c$ avec, en pourcentage en poids:

$$89 \leq b \leq 96; \quad 4 \leq c \leq 11$$

pour laquelle R signifie au moins un des éléments Titane, Zirconium, Niobium et Tantale et en ce que l'alliage est dépourvu de phases intermétalliques Cu-R.

4. Feuilles de brasure selon la revendication 3, caractérisé en ce que R signifie le Titane, et que la composition contient de 6,5 à 11% en poids de Titane et le reste du Cu.

**Claims**

1. A rapidly quenched ductile brazing foil of microcrystalline structure made of an alloy consisting fundamentally of copper, at least one element having an affinity to oxygen, and where appropriate silver, characterised in that this alloy has the composition $Ag_aCu_bR_c$ where (in weight %):

$$0 \leq a \leq 44, \quad 52 \leq b \leq 96, \quad 4 \leq c \leq 8,$$

$$a+b+c=100,$$

where R is at least one of the elements titanium, zirconium, niobium and tantalum and the alloy is free of intermetallic CuR-phases.

2. A brazing foil as claimed in Patent Claim 1, characterised in that it consists of 6.5 to 8 weight % titanium, up to 44 weight % silver and the remainder copper.

3. A rapidly quenched ductile brazing foil of microcrystalline structure made of an alloy which consists fundamentally of copper and of at least one element having an affinity to oxygen, characterised in that this alloy has the composition $Cu_bR_c$ where (in weight %):

$$89 \leq b \leq 96, \quad 4 \leq c \leq 11,$$

where R is at least one of the elements titanium, zirconium, niobium and tantalum and the alloy is free of intermetallic CuR-phases.

4. A brazing foil as claimed in Claim 3, characterised in that R signifies titanium and the composition contains 6.5 to 11 weight % titanium and the remainder copper.

4

EP 0 185 954 B1

FIG 1

1